# EUROPEAN PATENT APPLICATION

(11) **EP 0 851 377 A1**
(43) Date of publication of application: **01.07.1998**
(21) Application number: 97310180.1
(22) Date of filing: 16.12.1997
(51) Int. Cl.: G06K 7/00, G06K 7/10

(54) **Passenger, baggage, and cargo reconciliation system**

(30) Priority: 31.12.1996 US 782026
(71) Applicant: LUCENT TECHNOLOGIES INC., Murray Hill, New Jersey 07974-0636 (US)
(72) Inventor: MacLellan, John Austin, Freehold, New Jersey 07728 (US); Smithgall, David Harry, East Windsor, New Jersey 08520 (US); Shober, Anthony R., Red Bank, New Jersey 07701 (US); Wright, Gregory Alan, Fair Haven Monmouth,N.J 07704 (US)
(74) Representative: Buckley, Christopher Simon Thirsk

(57) **Abstract**

A radio frequency identification system, using modulated backscatter radio communications, is disclosed which supports the automated reconciliation of passengers, baggage, and cargo on a transport. A baggage tag (105) is attached to each piece of checked baggage, where the baggage tag is a read-only tag with modulated backscatter radio capability. Thus, each piece of checked baggage can be identified for sortation, and also identified to ascertain if it has been loaded onto a particular aircraft. Pieces of baggage can be either loaded directly onto an aircraft, or loaded onto a cargo container, where a cargo tag (105) is attached to the cargo container; the cargo tag is a read-write tag with modulated backscatter radio capability. The aircraft itself may be equipped with aircraft tags (105), which could be read-only or read-write tags with modulated backscatter radio capability. Aircraft tags allow a positive association between the identity of the baggage or cargo container being loaded, the aircraft on which it is being loaded, and the cargo bay doorway through which it is being loaded. To identify passengers, several alternatives are disclosed. In one embodiment, a magnetic boarding pass can be used with a magnetic stripe containing information about this passenger. In this embodiment, the passenger is responsible for inserting the magnetic boarding pass into a magnetic card reader as the passenger boards the flight. In another embodiment, a radio boarding pass could be used. The radio boarding pass resembles a conventional boarding pass, however it has read-only modulated backscatter radio capability, perhaps identical with the technology used for the baggage tag. The radio boarding pass can be read as the passenger boards the aircraft. In an alternate embodiment, the passenger can have a passenger card, which is a read-write tag with modulated backscatter capability. The passenger card can be read as the passenger boards the aircraft, to identify the passenger. Alternately, the passenger card can be used for a number of enhanced passenger service applications in a generalized transportation environment.

## Description

### Related Applications

Related subject matter is disclosed in the following applications filed concurrently herewith and assigned to the same Assignee hereof: U.S. patent applications "Shielding Technology In Modulated Backscatter System," Serial No. ; "Encryption for Modulated Backscatter Systems," Serial No. ; "QPSK Modulated Backscatter System," Serial No. ; "Modulated Backscatter Location System," Serial No. ; "Antenna Array In An RFID System," Serial No. ; "Subcarrier Fluency Division Multiplexing Of Modulated Backscatter Signals," Serial No. ; "IQ Combiner Technology In Modulated Backscatter System," Serial No. ; "In-Building Personal Pager And Identifier," Serial No. ; "In-Building Modulated Backscatter System," Serial No. ; and "Inexpensive Modulated Backscatter Reflector," Serial No. . Related subject matter is also disclosed in the following applications assigned to the same assignee hereof: U.S. patent application 08/504188, entitled "Modulated Backscatter Communications System Having An Extended Range"; U.S. Patent Application Serial No 08/492,173, entitled "Dual Mode Modulated Backscatter System,"; U.S. Patent Application Serial No. 08/492,174, entitled "Full Duplex Modulated Backscatter System,"; and U.S. Patent Application Serial No. 08/571,004, entitled "Enhanced Uplink Modulated Backscatter System." Related subject matter is also disclosed in the following U.S. Patents: U.S. Patent No. 4,711,994, U.S. Patent No. 5,051,565, and U.S. Patent No. 5,478,991.

### Field of the Invention

This invention relates to wireless communication systems and, more particularly, to a wireless communication system using modulated backscatter technology.

### Background of the Invention

In the transportation industry, four types of objects are typically transported; passengers, cargo, baggage associated with specific passengers, and cargo not associated with any passengers. To reconcile passengers, cargo, and/or baggage at the start and/or end of transport, it is important to know which passengers are "on board," which cargo and pieces of baggage are on board, and which cargo and pieces of baggage belong to which passengers, if any. Such reconciliation is performed using a passenger, baggage, and cargo reconciliation system. For illustrative purposes of this application, reconciliation systems will be described herein with reference to aircraft as the transportation mechanism.

Consider a commercial airline flight with passengers, baggage, and cargo on board the aircraft. The passengers board the passenger compartment of the aircraft and the baggage and cargo are stored in the cargo compartments of the aircraft. In larger or containerized aircraft, smaller pieces of baggage or cargo are stored in containers, which are then loaded onto the aircraft. Note that the term "container" includes, but is not limited to, containers and pallets. Smaller aircraft are typically "non-containerized" in the sense that the size of the cargo compartment is insufficient to accommodate the containers used in larger aircraft. Such aircraft are "freeloaded," i.e., each piece of baggage is manually loaded onto and removed from the aircraft. On a freeloaded aircraft, the pieces of baggage are typically transported up a moving ramp from the ground to the doorway of the cargo compartment. Note that some containerized aircraft may have portions of the cargo compartment that are insufficient to accommodate containers. In such containerized aircraft, a combination of freeloading and containerized loading techniques is used.

Let us consider some of the information the Reconciliation System should include for an aircraft. First, the Reconciliation System should include information regarding the identity of each passenger boarding the aircraft. Checking in for a flight does not guarantee that a passenger boards the aircraft. It is not uncommon for a passenger to arrive at the airport, check in at the gate and be given a boarding pass, and then fail to board the aircraft; such failure could be caused by the passenger being in the duty free shop, changing his/her mind about traveling, deciding to take a different flight, etc. Furthermore, the number of passengers on board and how those passengers are seated constitutes information used by the flight crew to plan a safe flight.

Second, the Reconciliation System should also include information regarding the baggage associated with the passengers. The passengers typically checked in their baggage at an airport curb or a check-in station. A baggage tag is usually attached to each piece of baggage, wherein a baggage tag is a paper with printed information, such as the name of the destination city and one or more flight numbers. More recently, a bar code having a "license plate" identification is also printed on the baggage tag, wherein the license plate includes a set of numbers and/or letters that identifies the originating airline and an index number that identifies the corresponding piece of baggage. The license plate is entered in a computer system and is typically associated with the passenger checking-in the baggage and his/her itinerary. The baggage is subsequently sorted and routed to the proper aircraft using the information contained in the baggage tag. Specifically, a baggage handler sorts and routes the baggage to an airport gate by reading the baggage tag manually or with an optical bar code reader. At the gate, assuming a containerized aircraft, the pieces of baggage are loaded onto containers, which are then loaded onto the proper aircraft. At the conclusion of the flight, the process is reversed. For a non-containerized aircraft, the pieces of baggage are loaded directly onto the aircraft and, at the conclusion of the flight, the process is reversed.

Finally, the Reconciliation System should also include information regarding the cargo to be loaded onto the aircraft. The cargo is sorted and then loaded onto the proper container, assuming a containerized aircraft. The container is then routed to and loaded onto the proper aircraft. At the conclusion of the flight, the process is reversed. For the purpose of this application, discussions involving baggage should be construed to include cargo unless otherwise specified.

Passenger, Baggage and Cargo Reconciliation Systems of today are unreliable for the following reasons. As mentioned above, a record of a passenger checking in at the gate gives no assurance that the passenger is actually on board the aircraft. A more reliable mechanism to determine which passengers are on board is required. From the baggage perspective, there are several problem areas. First, the bar code on the baggage tag are not a reliable source of information because the baggage tag may wrinkle and fade due to frequent handling, thereby causing a significant percentage of attempts to read bar codes ending in failure. For a piece of baggage that has been through one or two "hops", and has therefore been handled frequently, it is not uncommon for the percentage of bar codes that can be successfully read to be near 50%. Bar codes unsuccessfully read must be manually processed,
therefore adding expense, time and human error. Second, once the bar code is read (either manually or with the optical bar code reader), there is no guarantee that the piece of baggage is actually loaded onto the correct aircraft, or even loaded onto any aircraft. It could be overlooked at the gate, loaded onto the wrong container, or the container could be loaded onto the wrong aircraft. Third, after the piece of baggage is loaded, if the associated passenger does not board the aircraft, it may become necessary to unload that piece of baggage for safety reasons, e.g., prevention of the placement of bombs on an aircraft by a terrorist. In such a situation, the airline either finds the passenger and have that passenger board the aircraft, or the airline unloads the corresponding piece of baggage. Depending on the Reconciliation System used, it may not be easy to determine where in the aircraft a piece of baggage is located. Therefore, valuable time could be lost searching for a particular piece of baggage. On some international flights, this process could delay a flight by as much as two hours.

There are elements of today's technology which could be of benefit in solving some of the aforementioned problem. The following are some examples. A passenger's boarding pass include a magnetic stripe which identifies that passenger, wherein the magnetic stripe is read into an airline's computer system as that passenger boards the aircraft. Such a system is now being deployed by some airlines. The bar code of the baggage tag could also include information that identifies each piece of baggage in a manner similar to a social security number. This information could be read into the airline's computer system as the baggage is either freeloaded onto the aircraft or the container. Likewise, the container could also be identified with a bar code and read into the airline's computer system as it is loaded onto the aircraft. An association could be made on the airline's computer system to indicate which pieces of baggage are associated with each passenger, and whether the passenger has boarded the aicraft and/or the associated pieces of baggage have been loaded onto the aircraft.

The above-mentioned solution, however, is costly in terms of staff effort and time -- especially with respect to the baggage and cargo portions of the solution. In the above-mentioned solution, each element of cargo or baggage must be individually and successfully scanned, thereby leading to significant overhead. In addition, the bar codes deteriorate after they have been repeatedly handled making them more difficult to successfully scan.

One prior art Reconciliation System uses machine readable labels on the passenger's boarding pass and on the baggage tag that supports a computer system performing reconciliation functions. In such a system, the machine readable labels generally store little information, such as information similar to the "license plate" mentioned above. In another prior art Reconciliation System, an identification tag readable with electromagnetic is attached to the baggage tag. This prior art Reconciliation System integrates a specific design of a paper baggage tag with electromagnetic reading capability. In all of these prior art Reconciliation Systems, the passenger and baggage tags are "read-only" and hold relatively little data and rely on a central database to perform the reconciliation functions. Furthermore, the prior art Reconciliation Systems do not provide a direct way to determine the specific container in which a piece of baggage has been loaded. In the event a particular piece of baggage must be removed from the flight, it is imperative that the location (i.e., which container) of the baggage be known.

Accordingly, there exist a need for a Reconciliation System that has very high reliability in reading data, no manual intervention required to read such data, and the ability to integrate passengers, baggage, cargo, and containers using a single communication infrastructure.

### Summary of the Invention

The present invention discloses a communication system that includes a radio frequency identification using modulated backscattering. In one embodiment, the communication system is used for the reconciliation of passengers, baggage and cargo on a transport. Specifically, the communication system comprises interrogators for transmitting downlink signals and receiving uplink signals, and tags for receiving the downlink signals and transmitting the uplink signals. The tags are operable to demodulate a first information signal from a downlink signal and generate a second information signal having a data rate f, wherein the contents and data rate f of the second information signal depends on the contents of the first information signal. Subsequently, the second information signal and a subcarrier signal is used to generate an output signal, which is used to modulate backscatter the downlink signal.

In one embodiment, the tag includes a modulator that generates an output signal by modulating the second information signal onto the subcarrier signal if the second information signal is not a single bit message. If the second information signal is a single bit message, the modulator generates an output signal that is an unmodulated subcarrier signal. In another embodiment of the present invention, the interrogators include a narrowband filter for filtering noise from the uplink signals.

In one embodiment, the downlink signal includes an interrogation signal which instructs one or more tags receiving the downlink signal to transmit an uplink signal which includes data stored in a memory of the tag. In another embodiment of the invention, the downlink signal includes a tag address and a location signal which instructs the tag corresponding to the tag address to transmit an uplink signal that can be used to locate the tag. In another embodiment, the downlink signal includes a tag address and data which is to be stored in the tag corresponding to the tag address.

### Brief Description of the Drawing

The features, aspects, and advantages of the present invention will become better understood with regard to the following description, appended claims, and accompanying drawings where:
FIG. 1 shows a block diagram of an illustrative Radio Frequency Identification (RFID) system;
FIG. 2 shows a block diagram of an illustrative Interrogator Unit used in the RFID system of FIG. 1;
FIG. 3 shows a block diagram of a Tag Unit used in the RFID system of FIG. 1;
FIG. 4 shows the relationships among the Interrogation, Location Mode, and Messaging Mode Ranges;
FIG. 5 shows the relationships among the Uplink Range for the Interrogation, the Uplink Range for the Messaging Modes, and the downlink Range for all three Modes;
FIG. 6 shows a Radio baggage tag;
FIG. 7 shows a block diagram of the electronics of the Radio baggage tag of FIG. 6;
FIG. 8 shows how a Cargo Container, with an attached Container Tag, is identified and loaded onto an Aircraft; and
FIG. 9 shows a Passenger entering a Gateway that leads to an aircraft, and how the Passenger is identified.

### Detailed Description

The present invention is a Reconciliation System having a Radio Frequency Identification (RFID) system using Modulated Backscatter (MBS). In one embodiment of the present invention, the Reconciliation System utilizes Tags that are capable of transmitting data at various data rates, wherein the slower data rates extend the range of the Reconciliation System, as will be described herein.

### RFID Systems

Radio Frequency Identification (RFID) systems are used for identification and/or tracting of equipment, inventory, or living things. RFID systems are radio communication systems that communicate between a radio transceiver, called an Interrogator, and a number of inexpensive devices called Tags. In RFID systems, the Interrogator communicates to the Tags using modulated radio signals, and the Tags respond with modulated radio signals. Specifically, the Interrogator transmits an amplitude modulated signal to the Tag, and then transmits a Continuous-Wave (CW) radio signal to the Tag. The Tag modulates the CW radio signal using Modulated BackScattering (MBS) where the antenna is electrically switched, by a Tag's modulating signal, from being an absorber of RF radiation to being a reflector of RF radiation, thereby encoding a Tag's information onto the CW radio signal being reflected. The Interrogator demodulates the incoming CW modulated radio signal and decodes the Tag's information.

### MBS Operation

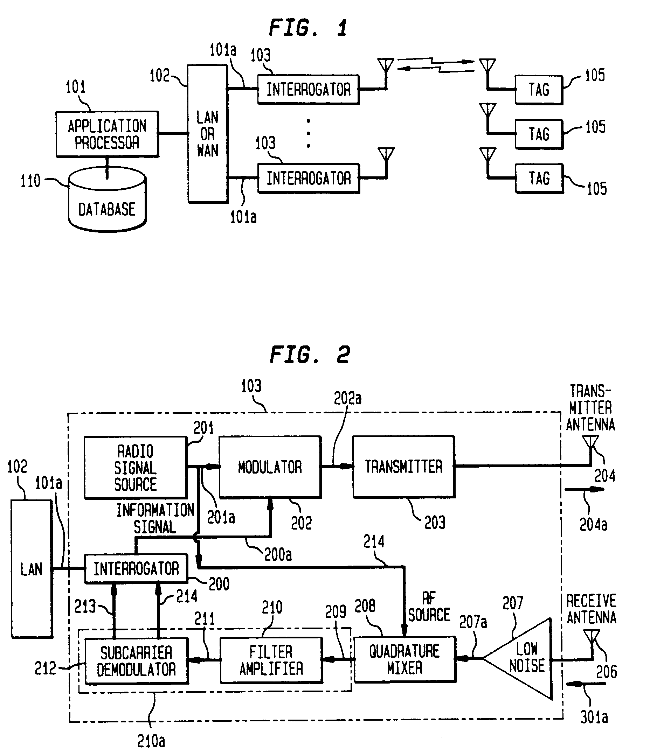

Referring to FIG. 1, there is shown an overall block diagram of a Radio Frequency Identification (RFID) system in accordance with one embodiment of the present invention. As shown in FIG. 1, an Application Processor 101 communicates over a Local Area Network (LAN) or Wide Area Network (WAN) 102 to a plurality of Interrogators 103 which, in turn, communicate with one or more Tags 105. Referring to FIG. 2, there is shown a block diagram of an illustrative Interrogator 103 As shown in FIG. 2, a processor 200 receives an Information Signal 101a from the LAN 102. The processor 200 subsequently formats the Information Signal 101a into an Information Signal 200a. A Modulator 202 modulates the Information Signal 200a onto a Radio Signal 201a (also referred to herein as a "carrier signal") generated by a Radio Signal Source 201, thereby creating a First Modulated Signal 202a (also refereed to herein as a "Modulated Carrier Signal") which is then transmitted by a Transmitter 203 via Antenna 204. Upon transmission of the First Modulated Signal 202a, the Interrogator 103 then transmits a continuous wave (CW) radio signal. Transmission from the Interrogator is referred to herein as a Downlink. Thus, the transmitted First Modulated Signal and CW radio signal constitutes a Downlink Signal 204a.

In one embodiment, the First Modulated Signal 202a is transmitted using amplitude modulation. In this embodiment, amplitude modulation is chosen because amplitude modulated signals can be demodulated by the Tag with a single inexpensive nonlinear device such as a diode.

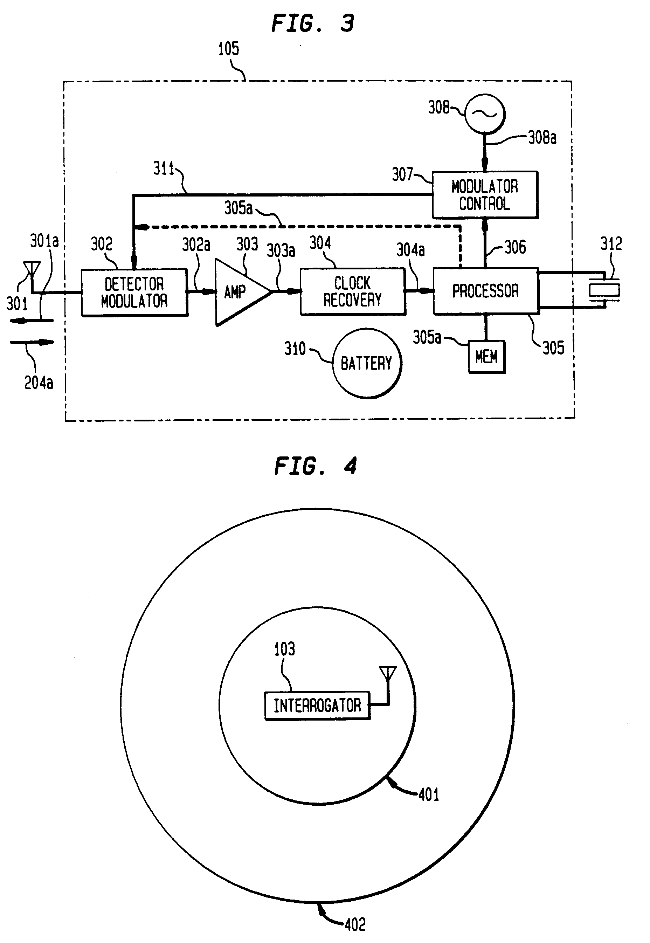

Referring to FIG. 3, there is shown a block diagram of an illustrative Tag 105. As shown in FIG. 3, the Tag 105 includes an Antenna 301, such as a loop or patch antenna, for receiving the Downlink Signal 204a transmitted by the Interrogator 103. The First Modulated Signal of the Downlink Signal 204a is demodulated, directly to baseband, using a Detector/Modulator 302 -- that is, the resulting demodulated signal 302a is essentially the Information Signal 200a. In one embodiment, the Detector/Modulator 302 is a microwave diode, such as the well-known Schottky diode. To minimize signal loss of the First Modulated Signal, the Detector/Modulator 302 should be appropriately biased with the proper current level in order to match the impedance of the Antenna 301 to the Detector/Modulator 302.

The Demodulated Signal 302a is then amplified by an Amplifier 303 and synchronization recovered in a Clock and Frame Recovery Circuit 304. The resulting Recovered Signal 304a is sent to a Processor 305, where the Recovered Signal 304a is analyzed - that is, the Processor 305 examines the content of the Information Signal 200a. Note that the Processor 312 includes a crystal oscillator 312 for providing timing information. In one embodiment, the Processor 305 is typically an inexpensive 4- or 8-bit microprocessor, and the Clock and Frame Recovery Circuit 304 is implemented in an ASIC (Applied Specific Integrated Circuit) which cooperates with the Processor 305. For purposes of this application, the term processor includes, but is not limited to, processors, micro-processors, and ASICs.

Depending on the content of the Information Signal 200a, the Processor 305 then generates another Information Signal 306 to be sent from the Tag 105 back to the Interrogator 103. The Information Signal 306 is provided as input to a Modulator Control Circuit 307, which uses the Information Signal 306 to modulate a Subcarrier Signal 308a generated by a Frequency Source 308. In one embodiment, the Frequency Source 308 is derived from the crystal oscillator 312, or is a crystal oscillator separate from the Processor 305. In another embodiment, the frequency source is derived from signals present inside the Processor 305 -- such as a divisor of the primary clock frequency of the Processor.

The Modulated Control Circuit 307 outputs a Modulated Subcarrier Signal 311, which is used by the Detector/Modulator 302 to modulate the CW radio signal of the Downlink Signal 202a, thereby producing a Modulated Backscatter (e.g., reflected) Signal 301a. Note that transmission from the Tag to the Interrogator is referred to herein as an Uplink. Thus, the Modulated Backscatter Signal constitutes an Uplink Signal.

In one embodiment, the presence of the Modulated Subcarrier Signal 311 (or lack thereof) causes the Detector/Modulator 302, e.g., Schottky diode, to change the reflectance, i.e., impedance, of the Antenna 301 -- for example, the impedance of the antenna is changed from zero to infinity.

Power is provided to the circuitry of the Tag by a power source 310. For purposes of this application, the term "power source" includes, but is not limited to, batteries and devices operable to transform microwave or magnetic energy into electrical energy, such as rectifiers and inductive couplings.

It has been found that considerable advantages are present to an MBS design that uses a single frequency subcarrier. Many modulation schemes are possible. These modulation schemes include, but are not limited to, Phase Shift Keying (PSK) of the subcarrier (e.g., BPSK, QPSK) and more complex modulation schemes (e.g., MSK, GMSK).

Referring back to FIG. 2, the Interrogator 103 receives the Uplink Signal 301a with a Receive Antenna 206, amplifies the Uplink Signal 301a with a Low Noise Amplifier 207, thereby obtaining an Amplified Signal 207a. The Amplified Signal 207a is provided as input to a Mixer 208, which uses homodyne detection to demodulate the Amplified Signal 207a down to the intermediate frequency (IF) corresponding to the subcarrier signal 308a (frequency fₛ) -- that is, the Radio Signal 201a is used to demodulate the Amplified Signal 207a to obtain a Demodulated Signal 209, which is essentially the Modulated Subcarrier Signal 311. Note that such homodyne detection has advantages in that it greatly reduces phase noise in the receiver circuits. Subsequently, the Mixer 208 sends the Demodulated Signal 209 into a Filter/Amplifier 210 where the Demodulated Signal 209 is filter The resulting Filtered Signal 211 is then demodulated in a Subcarrier Demodulator 212 to obtain an Information Signal 213, which is essentially the Information Signal 306. The Information Signal 213 is provided as input to a Processor 200 to determine the content of the Information Signal 213. Note that if the Mixer 208 is a Quadrature Mixer, the Mixer 208 will send both I (in phase) and Q (quadrature) signals. In such a case, the I and Q channels of Demodulated Signal 209 can be combined in the Filter/Amplifier 210, in the Subcarrier Demodulator 212, or in the Processor 200.

In an alternate embodiment of the present invention, the Interrogator includes a single antenna for transmitting and receiving radio signals. In this embodiment, an electronic method of separating the transmitted signal from that received by the receiver chain is needed. This could be accomplished by a device such as a Circulator, which is well-known in the art.

The present invention includes several implementations of the Subcarrier Demodulator 212. These implementations include, but are not limited to, conventional analog I/Q demodulation of the subcarrier signal using, e.g., a Costas Loop, Digital Signal Processing (DSP) of the sampled subcarrier, or implementing a receiver in digital logic. Since minimizing the system cost is one objective, one embodiment of the present invention implements the Subcarrier Demodulator in digital logic.

### Range Extension

The performance of the present invention can be enhanced by extending the range of the RFID system. Essentially, this involves extending the ranges of the Downlink and the Uplink. Extending the range of the Downlink involves several factors. First, the range of the Downlink can be extended by minimizing signal loss. As mentioned earlier, in one embodiment, the Downlink is an amplitude modulated signal which is easily and inexpensively detected by a Detector/Modulator that is a single nonlinear device, such as a microwave or Schottky diode. To minimize signal loss from the antenna 301 to the nonlinear Detector/Modulator, it is important to match the impedance from the antenna to the diode. Second, the data rate of the Downlink can be limited to reduce the noise bandwidth of the Downlink signal. Third, the Antenna 301 of the Tag can be used to filter out RF signals outside of the antenna bandwidth (in additional to receiving RF signals). For example, at 2.45 GHz, allowable RF carrier frequencies are from 2.400 - 2.485 GHz. The design of the antenna, such as a patch antenna, covers this frequency band but filters out frequencies beyond this range. An ideal frequency response would be for antenna sensitivity to be within 3 dB across the allowable frequency range, but to fall off rapidly beyond this range. Furthermore, the Amplifier 303 can also act as a filter in the sense that the Amplifier can be designed to only pass signals that are within a certain passband around the expected Downlink data rate, which typically ranges from a few kilobits per second up to tens of kilobits per second The above-described Tag design is not greatly sensitive to RF transmissions inside the frequency band of the antenna, whose modulation scheme is primarily a constant envelope. Thus, such Tag design allows a robust Tag which is resistant to many potential interfering signals.

Extending the range of the Uplink also involves several factors. First, the noise bandwidth of the Uplink signal could be reduced by decreasing the data rate as much as possible. The number of useful applications that can be implemented is not limited if the data rate of the Uplink signal is limited to a few bits per second. The limitation of the data rate can be taken to the extreme in which there is no data modulated onto the single subcarrier frequency. In such a case, the mere presence or absence of a signal received at this subcarrier frequency can indicate an "acknowledgment" or "no acknowledgment" to a previous message. Second, the range of the Uplink can be extended using narrowband filtering of a subcarrier signal, wherein the subcarrier signal can be relatively accurately determined. In one embodiment, the frequency source 308 generates a subcarrier signal with a relatively accurate frequency. For example, the Frequency Source 308 can be a commercially available and inexpensive crystal oscillator with a frequency of 32kHz, and an accuracy of ± 100 ppm -- that is, the frequency of the crystal oscillator is known to within ± 3.2 Hz. In one embodiment, narrowband filtering is implemented in the Interrogator using a processor 210a, such as a digital signal processor (DSP), that performs the functions of the Filter Amplifier 210 and the Subcarrier Demodulator 217. In this embodiment, the processor 210a uses narrowband filtering algorithms, which are well-known in the art, to perform digital filtering of the signal with a bandwidth of less than 10 Hz, and first sidelobes that are depressed 60 dB. Then, the signal strength of the signal received through this digital signal processor 210a is measured, and that strength is compared to a reference signal strength which is sufficiently above the average noise in that channel when no signal is present such that spurious noise spikes are not misinterpreted as actual signals. In this manner, very weak Uplink signals can be reliably detected. It has been found that, using these techniques, roughly equivalent range in the Downlink and the Uplink can be achieved.

We now discuss the location of the subcarrier frequency fₛs. MBS systems exhibit noise in the Uplink signals due to reflections of the RF source from any number of reflectors. There are typically two categories of reflectors: reflectors that reflect signals at the same carrier frequency at which the signal was transmitted, and reflectors that reflect signals at frequencies away from the carrier frequency at which the signal was transmitted. The former category includes walls and metal objects. Signals reflected from these reflectors have an arbitrary phase relationship with respect to the carrier signal. To cancel the reflections, a Quadrature Mixer 208 operating as a Homodyne Detector is used. The latter category of reflectors generates reflected noise at frequencies away from the main carrier frequency --either from Doppler shifts (caused by moving metallic objects) or from reflections off of electronic equipment operating at frequencies near the Subcarrier Frequency. One particularly difficult source of noise is fluorescent lights, which have been shown to produce noise not only at their fundamental 60 Hz (in the United States) frequency, but also at overtone frequencies well up into the tens of thousands of Hertz. It has been found especially helpful to locate the subcarrier frequency fₛ such that it falls between multiples of the fundamental 60 Hz frequency. In one embodiment, a 32 kHz crystal oscillator is used to generate a subcarrier frequency that meets this requirement.

### Multiple Mode Operation

In one embodiment, the Reconciliation System is capable of multi-mode operation. In this embodiment, the Tags and Interrogator are operable to transmit data at a high data rate and a low data rate. Note that other data rate modes are also possible, and the present invention should not be construed to be limited to the two aforementioned data rates. In one embodiment of the present invention, actual data messages, e.g., multi-bit or high bit messages, are transmitted and received by the Reconciliation System using the high data rate mode, and acknowledgment messages, e.g., single or low bit messages, are transmitted and received by the Reconciliation System using the low data rate mode.

Advantageously, the low data rate mode provides the Reconciliation System of the present invention with enhanced range. As discussed earlier, the low bit rate mode is used to transmit the acknowledgment messages which are typically one bit or relatively low bits. Because of this fact, the acknowledgment messages could be transmitted over smaller frequency bands than actual data messages. Smaller frequency bands permit the application of narrowband filtering of noise outside the frequency band, thereby enhancing the range the acknowledgment message could be transmitted.

As discussed above, to send a single bit of information, the Tag could generate an unmodulated subcarrier frequency which could be modulated onto the incident signal, i.e., reflected continuous wave radio signal, using modulated backscatter. The Interrogator would then receive a reflected signal with a single frequency tone. Narrowband filtering techniques could then be used to reduce the noise bandwidth and determine the presence or absence of this signal.

In operation, the Tag 105 detects and assembles the bits of Information sent from the Interrogator 103 as a Downlink message. Typically, a pattern of synchronization bits is transmitted at the beginning of the Downlink message. These bits allow the Tag to acquire bit and message synchronization, thereby enabling the Tag to determine the beginning and the end of the Downlink message. In one embodiment, the Downlink message includes an Address, a Command, and perhaps Data and Error Detect and/or Correct. The Command or Data portion of the Downlink message should indicate whether the Tag 105 is to return an actual data message, such as a Tag ID or other application-specific data, or an acknowledgment message, such as a single-bit acknowledgment message.

The Processor 305 of the Tag 105 determines what type of Uplink signal is to be transmitted back to the Interrogator. There are several ways that the Tag 105 may transmit either an actual data message or an acknowledgment message so that the Interrogator 103 can receive and distinguish between these two different types of messages. Referring back to FIG. 3, in one embodiment, the Information Signal 306 is transmitted from the Processor 305 to the Modulator Control 307 over a lead 306a. In the event that Processor 305 of Tag 105 is to send a "single tone" message consisting of a single information bit, the lead 306a is maintained in a first logic state to indicate that no information message is to be sent, thereby causing the Modulator Control 307 to output an unmodulated subcarrier signal 311. In the event that Processor 305 determines that an actual data message is to be sent, the lead 306a conveys the actual data message to the Modulator Control 307. This actual data message is then used to modulate the subcarrier signal 308a using one of several possible modulation techniques, such as amplitude, phase, frequency, or code modulation.

Referring back to FIG. 2, the Interrogator 103 receives and demodulates the modulated (or unmodulated) subcarrier signal from the received Uplink signal, and then applies filtering. Given the specifics of the subcarrier frequency, a suitable filtering amplifier 210 is utilized to filter out noise. Subcarrier Demodulator 212 then demodulates the Information Signal 306, if any, from the modulated (or unmodulated) subcarrier signal. The Processor 200 then performs the digital signal processing necessary to decode the information signal 306. In one embodiment of this invention, the Processor 200 may be a Digital Signal Processor (DSP). In other embodiments, a conventional Microprocessor could be used as the Processor 200.

To recover a "single tone" acknowledgment message having a single subcarrier tone, the filtering amplifier should be a narrowband filter. While conventional filter technologies could be used, it may be most effective to utilize the DSP 210a mentioned above as a narrowband filter. The subcarrier frequency of this single tone is well known since the Tag 105, in one embodiment, would typically use an inexpensive crystal as the frequency source. Even with the limited accuracy of that crystal, the subcarrier frequency could be known to an accuracy of a few Hertz, therefore allowing very narrowband filtering. Since the acknowledgment message response from Tag 105 is used to extend the range of the RFID system and consequently would likely be a very faint signal, it places an additional burden on the narrowband filter of filtering amplifier 210.

Another way that the DSP mentioned above could be used is to dynamically search for the frequency components of the Uplink signal. This could be accomplished by performing a Fourier Transform on the incoming data stream, in one embodiment, using the Processor 200 of FIG. 2. In this embodiment, the multiple signals representing a modulated subcarrier signal could be differentiated or a single subcarrier signal of uncertain data rate could be recovered using the Fourier Transform to search for multiple signals.

Thus, we have shown how a modulated backscatter communication system can operate in two modes --one in which the backscattered signal is modulated to provide a high data rate Uplink communication channel, and one in which the backscattered channel is modulated with a low data rate signal, perhaps a single tone, to provide an Uplink acknowledgment signal that can be detected at great distances.

### Multi-Mode Implementation

In one embodiment, the multi-mode operation of the present invention Reconciliation System is implemented into three services. The first service to be discussed is referred to herein as "Interrogation" service. Interrogation begins with the Interrogator transmitting a Downlink referred to herein as an Interrogation Signal to the Tag. The Tag decodes the received Interrogation Signal and determines what actions to take based upon the decoded Interrogation Signal. In a "standard" Interrogation, the Tag would be requested to transmit a set of data referred to herein as Mandatory Data back to the Interrogator using MBS. Each Tag in a reading field of an Interrogator that receives the "standard" Interrogation responds with its Mandatory Data, using a protocol discussed herein. Note that the term "reading field" is defined as the area of space within which the Tag and the Interrogator can communicate. The Interrogator also transmits, as part of the "standard" Interrogation service, data intended for each and all Tags. Examples of such data include time of day, framing and other synchronization information, etc. In one embodiment, the Mandatory Data includes identification information

Beyond the "standard" Interrogation, other types of Interrogations are possible as well. For example, the Interrogator, after identifying a specific Tag using the Interrogation, could transmit additional data to that Tag to be stored in the Tag's memory. The Interrogator could also request the Tag transmit other data, stored in the Tag's memory, back to the Interrogator. These additional data communications could be performed at the same data rate used in the "standard" Interrogation. Thus, Interrogation could be used to transmit commands and data to each and every Tag, to identify a specific Tag in the reading field, and to communicate bi-directionally with a specific Tag. In Interrogation, the data rate required in the Downlink is typically not large, since the Interrogation Signal only must contain enough bits to request all Tags in the reading field to respond. In the Uplink, the amount of data is typically much larger than the amount of data in the Downlink. Since the Mandatory Data must frequently be transmitted in the Uplink in a time critical manner, the data rate should therefore be much higher in the Uplink than the Downlink -- that is, there exist asymmetry in data rates between the Uplink and Downlink in the sense that the Downlink data rate is smaller than the Uplink data rate.

The second service is referred to herein as "Location." The Location service is used by the Reconciliation System to locate the position of a Tag. In Location, the Interrogator transmits a Downlink referred to herein as a Location Signal to the Tag containing the address of a specific Tag to which the Location Signal is directed. In this service, the Tag is requested to respond, one embodiment, with a simple acknowledgment message, such as a constant tone signal. Using the narrowband techniques discussed above, a constant tone signal can be received by the Interrogator at a range far beyond the range of the Interrogation service. Therefore, in the Location service, there exist an asymmetric communications path where the Downlink has a greater data rate than the Uplink.

In one embodiment, the Location service is used to determine the location of a specific Tag 105 as follows. Let us assume that the Reconciliation System currently has no information as to the location of a Tag. The Interrogators of the Reconciliation System transmit location Signals and then listen for possible responses, i.e., acknowledgment messages. In one embodiment, each Interrogator is operable to determine the signal strength of the received response (if any) and reports their determination to a location process residing on the LAN 102 or Application Processor 101, wherein the location process is a software process operable to determine the location of a Tag based on the signal strength of the acknowledgment messages being reported to the location process by the Interrogators. In one embodiment, the location process determines the location of the Tag is equal to the location of the Interrogator receiving the strongest acknowledgment message signal strength, wherein the accuracy of the Tag's location is the effective range of that Interrogator. In another embodiment, the location process utilises a more complex method to determine a Tag's location if more than one Interrogator received an acknowledgment message. In this embodiment, the location of the Tag can be determined based on which Interrogator received an acknowledgment message and the spatial position of each Interrogator. For example, if two Interrogators received an acknowledgment message of equal signal strengths, then the Tag's position could be estimated at halfway between those two Interrogations. If three Interrogators received an acknowledgment message, then a "triangulation" could be performed. See "The NLOS Problem in Mobile Location Estimation Proceeding 1996 5th International Conference on Universal Personal Communic. Oct 96" by Marilynn Wyle and Jack Holtman.

The third service is referred to herein as "Messaging." In Messaging, a Downlink referred to herein as a Messaging Signal containing the address of one or more Tags and data intended for those Tags is transmitted by the Interrogators. The Tag or Tags whose address matches the Tag address or addresses in the Messaging Signal could be instructed to store that data in a memory associated with the Processor 305, such as memory 305a, or perform some other function with that data. There appropriate Tags could respond to the Messaging Signal in one of several manners. If the Messaging Signal instructs the Tag to store the data, the Tag acknowledges receipt of the Messaging Signal by returning an acknowledgment message to the Interrogator. Alternatively, if the Messaging Signal instructs the Tag to make a decision, or to transmit other data back to the Interrogator, then the response could be an acknowledgment message with a few bits of data. Thus, in Messaging, there exist an asymmetric communications path where the Downlink has a greater data rate than the Uplink if the Uplink is an acknowledgment message. If the Uplink is an actual data message, there will typically exist an asymmetric communications path where the Downlink has a smaller data rate than the Uplink.

In an alternate embodiment, it is possible for a communication to begin in one of the above services and change into another service. The following is an illustration of such a possible communication. Assume communication with a Tag is desired. A Messaging Signal is transmitted from the Interrogator to the Tag instructing the Tag to respond with a simple acknowledgment, which is received by the Interrogator. Further assume that, based upon the acknowledgment message received by the Interrogator, the Interrogator wishes to instruct the Tag to transmit additional data back to the Interrogator. For example, the Interrogator determines the signal strength of the acknowledgment message and, if the signal strength is below a certain threshold, limits the Uplink data rate to the data rate normally used in the Uplink for the Messaging service. Otherwise the signal strength is above a certain threshold and the Interrogator changes the Uplink data rate to the data rate normally used in the Uplink for the Interrogation service. It should be understood that, while the above example showed how the Uplink communications could take place at either one of two possible Uplink data rates, other Uplink data rates are possible.

In one embodiment of the present invention, all three services discussed above can coexist in the same system and be operational at the same time. We begin with the realization that these services, based upon the required data rates, support different ranges from the Interrogator to the Tag. For example, the Interrogation service involves significant data transmission over (relatively) short time periods, such as when a Tag moves by an Interrogator. The required data rate is further increased if there are several Tags in the reading field at one time. When there are multiple Tags transmitting data simultaneously, a protocol is required to allow multiple Uplinks without mutually interference. In one embodiment, the protocol used is Aloha or Slotted Aloha. Typical data rate for the Interrogation service range from 50 kbps - 300 kbps. Note that, in the absence of other factors, range and data rate trade off against each other. See "Queuing Systems Vol. 2 Computer Applications" by Leonard Kleinrock, published by John Wiley & Sons, NY in 1976.

In summary, there exist two different "asymmetries" in data rates: greater data rates for Uplink than Downlink in the Interrogation service, and greater data rates for Downlink than Uplink in the Location and Messaging services. Thus, the effective range for the Interrogation service is smaller than that of the Location or Messaging services because the Uplink data rate requirement is greater in the Interrogation service. This difference in ranges is illustrated in FIG. 4. It is important to observe the relationships between these data rates. In the "Range Extension" section above, it was disclosed how to achieve significant range extension using, among other techniques, narrowband filtering. In one embodiment, the Location and Messaging services roughly have a Downlink data rate of a few kilobits per second and an Uplink data rate of a few bits per second. The Interrogation service has roughly a Downlink data rate of a few kilobits per second and an Uplink data rate of 50 kbps - 300 kbps.

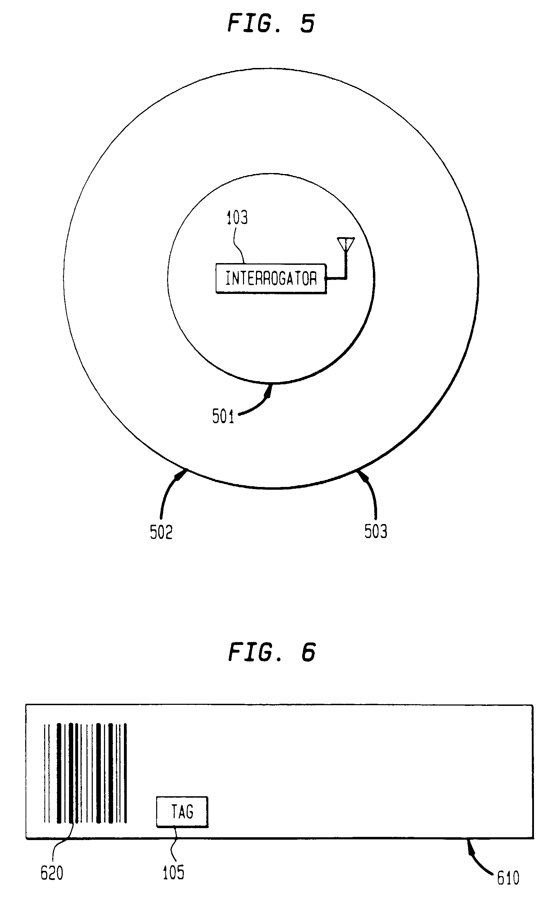

Referring to FIG. 5, there is shown an illustration of the relationship between the ranges for these three services. As shown in FIG. 5, the Downlink range 503 is the same for all three services. The Uplink range 502 for the Location and Messaging services is roughly the same as the Downlink range 503. By contrast, the Uplink range 501 for the Interrogation service is much smaller than the Uplink range 502.

Note that the above discussion ignores the effects of directional antennas. In some Interrogation applications, it is appropriate to use directional antennas to increase effective range, and to form a "reading field" whose shape and size is optimized to that application. The above discussion has been general, and implicitly assumes that all thee services use the same antenna technology. The use of different antenna patterns will be discussed herein.

### RFID System Architecture

At this point, the placement of the Interrogators will now be discussed. Referring back to FIG. 1, the Application Processor 101 is operable to support a Database 110 that stores information regarding passenger, baggage and cargo. For example, the Database 110 includes information about the identity of the passengers on board an aircraft, the passengers' associated baggage, the location of the baggage, etc. In one embodiment, the Interrogators are distributed throughout the airport complex. For purposes of discussion, it is assumed that the coverage throughout the airport complex for the Interrogation service is not complete, i.e., the Interrogation service is only available in certain well defined areas of the airport complex. This assumption is justified since the Interrogation service is generally used to identify Tags as they pass by a specific location (such as a doorway, etc.) It is further assumed that for the Location and the Messaging services, the coverage of the airport complex is greater than the coverage for the Interrogation service. Ideally, it is desirable to provide Location and Messaging services to anyone in the airport complex.

For the Location or Messaging services, one embodiment of the present invention would be to place enough Interrogators in the airport complex such that any point in the airport complex is within the range of at least three Interrogators, thereby permitting the implementation of a Location service using triangulation of the received Uplink signal strength. In another embodiment, the Interrogators are placed in a "partially overlapping" fashion, such that any point in the airport complex is within the radio coverage area of at least one Interrogator. Given this configuration, a relatively simple Location service can be implemented, with the accuracy of the Location service comparable to the coverage area of one Interrogator.

### Baggage and Cargo Identification

At this point, the distribution of the Tags will now be discussed. To support automated identification, one embodiment includes three types of Tags 105; a Radio baggage tag, a Container Tag, and an Aircraft Tag. These automated identification means supplement or replace methods in operation today, which includes manual sortation of optical bar codes.

### Radio baggage tag

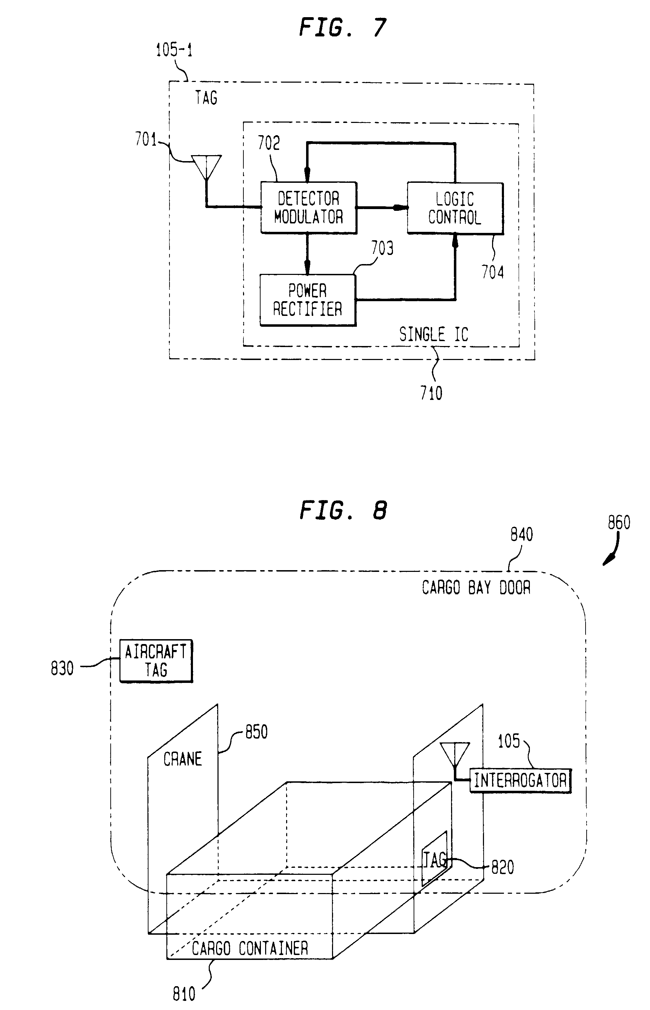

Referring to FIG. 6, there is shown a Radio baggage tag 610 in accordance with one embodiment of the present invention. As shown in FIG. 6, the Radio baggage tag 610 includes a Tag 105 which may have a luggage identification, a passenger identification, routing information, etc. Note that the Radio baggage tag 610 may also include a Bar Code License Plate 620 to provide routing and other information in airports where the Reconciliation System of the present invention is not available. To reduce the cost of the Radio baggage tag 610, several components of the Tag 105 may be eliminated. Referring to FIG. 7, there is shown a block diagram of a Tag 105-1 in accordance with one embodiment of the Radio baggage tag 610. As shown in FIG. 7, the Tag 105-1 includes an Antenna 701 and a single Integrated Circuit (IC) 710, which includes a Detector/Modulator 702, a Logic Control 704 and a Power Rectifier 703. In this embodiment, the Radio baggage tag 610 is a read-only Tag, and not a read-write Tag -- that is, the Tag 105-1 is only capable of responding to an Interrogation Signal, and the response provided to the Interrogation Signal is fixed, i.e., the Tag is "write once, read many."

The Tag 105 illustratively shown in FIG. 3 has been greatly simplified to arrive at the Tag 105-1 of FIG. 7. The Antenna 701 receives the incoming RF signal and power is supplied to the circuitry of the Tag 105-1 by the Power Rectifier 703, i.e., the Power Rectifier rectifies the incoming RF signal. The range at which the Radio baggage tag 610 can be powered is then the controlling factor in both the Downlink and the Uplink range. In one embodiment, the maximum range of the Tag 105-1 is two meters. Furthermore, since the Tag 105 is read-only (and not read-write), there is no need for a Processor as sophisticated as a 4 or 8 bit microprocessor, and custom logic, such as the Logic Control 704 can be substituted. Still further, since the data is written once and read many times, the Tag does not need an expensive on-chip re-writeable storage - that is, inexpensive fuses contained within the Logic Control 704 can be used. The Logic Control 704, upon detection of an incoming RF signal, then activates the Detector Modulator 702 to perform the modulated backscatter communications disclosed above. The Tag 105-1 of FIG. 3 can therefore be reduced to a Single IC 710 with an Antenna 701. Note that the Radio baggage tag 105-1 could also be used for the Location service. Further note that the initialization of the Radio baggage tag 610 includes writing into memory the data desired to be retrieved in the Interrogation service, e.g., associated passenger, identification number, etc. This initialization could be done during or after the process to print the Bar Code License Plate 620 onto the Radio baggage tag 610.

### Container Tag

In one embodiment, the Container Tag is a read-write Tag 105. Preferably, the Container Tag is packaged in a rugged packaging, due to the environmental stresses placed upon it. Referring to FIG. 8, there is shown a Container 810 with a Container Tag 820 being loaded onto an aircraft via a cargo bay door 840. In one embodiment, the Container Tag 820 is operable to respond to Interrogation, Messaging, and Location services. The Container Tag 820 is designed to be affixed to the Cargo Container 810 (which could be a container or a pallet), so that the Cargo Container 810 can be identified as it passes though an entrance or egress to a cargo handling facility, and aircraft, etc., where an Interrogator will be typically positioned.

Because the Container Tag 820 has read-write capabilities, the Container Tag 820 may be used to store helpful data. For example, assume that pieces of baggage containing Radio baggage tags 610 are loaded into a Container 810 equipped with a Container Tag 820. The identification data can be read from the Radio baggage tag 610 by the Interrogator using the Interrogation service. Such identification data can be subsequently transmitted to and stored in the Container Tag 820 using the Messaging service. Thus, data concerning the contents of the Container 810 would be available though the Container Tag 820. Also note that the Container Tag could also be used in the Location service to locate misplaced, lost or stolen containers. This could be of benefit in an airport environment, since it may happen for one airline to borrow a Container 810 from another airline, and not inform the other airline of the borrow.

### Aircraft Tag

Aircraft Tags of the present invention can be used to determine whether baggage, cargo and/or containers have been loaded onto a particular aircraft. In one embodiment, the Aircraft Tag is a function equivalent to the Tag 105 of FIG. 3 --that is, the Aircraft Tag has read-write capabilities. Referring back to FIG. 8, a Container 810 is loaded onto an Aircraft 860 by the use of a Crane 850. Mounted onto the Aircraft 860 at or near the Cargo Bay Door 840 is an Aircraft Tag 830. In one embodiment, the Aircraft Tag 830 has Mandatory Data that identifies the Aircraft 860 and the Cargo Bay Door 840 being used. In operation, the Interrogator 105 on top of the Crane 850 could read the Aircraft Tag 830, thereby allowing the Reconciliation System to know the identity of the Aircraft 860 on which baggage, cargo and containers are being loaded and the identity of the Cargo Bay Door 840 being used. Thus, associations between the Aircraft 860, the Cargo Bay Door 840, the Radio baggage tag 610, and the Container Tag 820 can be made.

### Passenger Identification

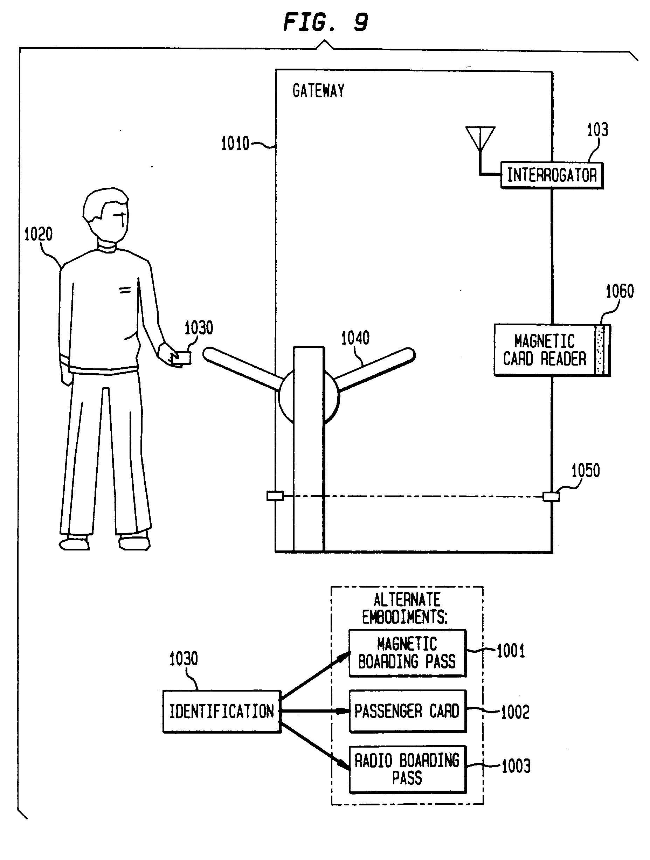

Referring to FIG. 9, there is shown a Passenger 1020 entering a Gateway 1010 to board an aircraft. The Passenger 1020 has an Identification means 1030. The Identification means 1030 can be, but is not limited to, a Boarding Pass 1001, a Radio Boarding Pass 1003, or a Passenger Card 1002.

### Magnetic Boarding Pass

The Magnetic Boarding Pass 1001 is a device, in one embodiment the size of an airline ticket, with an attached magnetic stripe. The information on the Magnetic Boarding Pass 1001 can include the identification of the passenger, the flight number and seat number of this passenger, and other such data. When the Passenger 1020 enters the Gateway 1010, the Passenger must insert the Magnetic Boarding Pass 1001 into a Magnetic Card Reader 1060. A mechanism, such as a Turnstile 1040 or an Optical Sensor 1050, to restrict a person without a valid identification from boarding is preferred. In this embodiment, the Magnetic Card Reader 1060 reads the contents of the Magnetic Boarding Pass 1001, and transmits the identity of the Passenger 1020, or other such information, to the Applications Processor 101 of the Reconciliation System which, in turn, stores and/or processes the information into the Database 110.

### Radio Boarding Pass

The Radio Boarding Pass 1003 is a device with an embedded Tag that is a functional equivalent to the Tag 105-1 of FIG. 7-- that is, the Radio Boarding Pass 1003 has a read-only Tag 105-1 containing the identification of the passengers, among other data. Thus, the identity of the Passenger 1020 can then be determined by an Interrogator 103 reading the Radio Boarding Pass 1003.

As disclosed below, using the incident RF field to power a Tag 105 will cause the effective range of that Tag 105 to be greatly reduced. Therefore, in order to read the Boarding Pass 1040 as the Passenger 1020 boards the aircraft, an Interrogator 103 should be located at the entrance of either the boarding ramp, or the entrance to the aircraft itself.

### Passenger Card

The Passenger Card 1002 is a functional equivalent of the Tag 105-1 of FIG. 3 -- that is, the passenger card 1002 has read-write capabilities, i.e., data can be transmitted to the Card, stored on the Card, and retrieved from the Card. A Passenger Card 1002 would likely be initially issued to the Passenger 1020, and then re-used over numerous trips.

The Passenger Card 1002 is operable to respond to the Interrogation, Messaging, and Location services discussed above. Thus, using the Interrogation service, the identity of the Passenger 1020 boarding the aircraft can be determined; using the Messaging Mode, data can be transmitted to the Passenger Card 1002; and using the Location Mode, the location of the Passenger can be determined.

As the Passenger Card 1002 approaches the check-in counter, the Passenger Card 1002 could be interrogated by the Interrogator 103. The identity of the Passenger 1020 could then be determined, thereby allowing the attendants to greet the Passenger 1020 by name. In another embodiment of the Passenger Card 1002, the Passenger Card 1002 could contain information regarding the identification numbers of the pieces of baggage checked by this Passenger 1020, thereby facilitating retrieval of the baggage.

The Passenger Card 1002 could also be used by the Passenger 1020 to check in at an automated check-in station, such as a device similar to an Automated Teller Machine, thereby expediting airport check-in procedures. The automated facility could also provide seat assignment based upon preferences stored in the Passenger Card 1002.

What has been described is merely illustrative of the application of the principles of the present invention. Other arrangements and methods can be implemented by those skilled in the art without departing from the spirit and scope of the present invention.

## Claims

1. A communication system comprising:
transmitter interrogators for transmitting a downlink signal having a modulated carrier signal and a radio signal, wherein the modulated signal is generated by modulating a first information signal onto the radio signal;
tags for receiving the downlink signal, demodulating the first information signal from the downlink signal and transmitting an uplink signal, wherein the uplink signal is generated by modulated backscattering an output signal onto the continuous wave radio signal, each of the tags including a modulator for generating an output signal which is dependent upon a second information signal having a data rate ƒ; and
receiver interrogators for receiving and demodulating the uplink signal.

2. The communication system of claim 1, wherein the transmitter interrogators include a first radio signal source to generate the radio signal and the receiver interrogators include a second radio signal source to demodulate the output signal from the uplink signal.

3. The communication system of claim 1, wherein the tag includes:
a subcarrier demodulator for demodulating the second information signal from the output signal.

4. The communication system of claim 1, wherein the modulator generates a modulated subcarrier signal if the second information signal is not a single bit message, the modulator generating the modulated subcarrier signal by modulating the second information signal onto a subcarrier signal.

5. The communication system of claim 1 further comprising:
a location process for determining locations of the tags based on signal strengths of uplink signals received by the receiver interrogators.

6. A communication system comprising:
an antenna for receiving a downlink signal and reflecting an uplink signal, the downlink signal having a modulated carrier signal and a radio signal;
a detector modulator for demodulating a first information signal from the modulated carrier signal and for generating the uplink signal by modulated backscattering an output signal onto the radio signal, the detector modulator being operable to change reflectance of the antenna;
a processor for examining the first information signal and generating second information signals with at least two data rates;
a frequency source for generating a subcarrier signal; and
a modulator for generating the output signal using the subcarrier signal and the second information signal.

7. The communication system of claim 6, wherein the processor generates a second information signal that is a single bit data.

8. The communication system of claim 6, wherein the processor generates a second information signal that is a multi-bit data.

9. A communication system comprising:
an antenna for receiving an uplink signal, wherein the uplink signal includes a radio signal modulated by an output signal;
a radio source for generating the radio signal;
a mixer for mixing down the uplink signal using the radio signal generated by the radio source to obtain the output signal; and
a subcarrier demodulator for demodulating an information signal from the output signal if the output signal is a modulated subcarrier signal.

10. The communication system of claim 9 further comprising:
a processor for providing a second information signal; and
a modulator for generating a modulated radio carrier signal by modulating the second information signal onto the radio carrier signal generated by the radio signal source.
